# EUROPEAN PATENT SPECIFICATION

(11) **EP 1 346 554 B1**
(45) Date of publication and mention of the grant of the patent: **25.02.2015**
(21) Application number: 01271733.6
(22) Date of filing: 10.12.2001
(51) Int. Cl.: H04M 3/493

(54) **METHOD FOR POSITIONING OF STATIONARY COMMUNICATION TERMINALS**
VERFAHREN ZUR POSITIONIERUNG STATIONÄRER KOMMUNIKATIONSENDGERÄTE
PROCEDE DE POSITIONNEMENT DE TERMINAUX DE COMMUNICATION STATIONNAIRES

(30) Priority: 20.12.2000 SE 0004771
(43) Date of publication of application: 24.09.2003
(73) Proprietor: TELIASONERA AB, 106 63 Stockholm (SE)
(72) Inventor: BERGENDORFF, Hans, S-175 45 Järfälla (SE)
(74) Representative: Groth & Co. KB
(86) International application number: PCT/SE2001/002722
(87) International publication number: WO 2002/051111

(56) References cited:
- WO-A1-00/22862
- US-A- 5 588 048
- US-A- 5 764 745

## Description

### Technical field

The present invention relates to a method for positioning of stationary communication terminals. By stationary terminals are here meant for instance fixed computers or telephones connected to a conventional, wire-based, telephone network. More exactly is related to a computer implemented method to establish a position related database for stationary communication terminals.

### Technical background

For mobile use, in the present situation, a lot of position related communication services are created. There are different ways of getting knowledge about where a mobile communication terminal is located. By a satellite navigation system such as Global Positioning Systems, GPS, position data can be obtained by means of a GPS-receiver. Such a receiver can be integrated with the mobile terminal, or integrated in, for instance, a car, and the accuracy is a few meters. In cellular networks for mobile communication, for instance Global System for Mobile Communications, GSM, there is also a possibility to, with a certain degree of accuracy, find the position of a mobile terminal. By, for instance, using the so called timing advance, it will be possible, in a GSM-network, to find the position of a GSM-terminal with an accuracy of a few hundred meters, depending on cell planning. Position related services which benefit from position data of mobile terminals are, for instance, geographically conditioned information services or e-shopping services. In that way for instance a service can offer information via, for instance, Wireless Application Protocol, WAP, about which pizza parlors that are located at shortest distance from the terminal.

Stationary communication terminals are in certain respects superior to mobile terminals. The fact that they need not be portable means, among other things, that larger memory can be used, and larger and better display screens. Usually also the bandwidth for data transmission is considerably better. For stationary communication terminals it would in some cases, as in the case with mobile communication terminals, be desirable to obtain position related information. Also with fixed, or stationary, terminals it would be an advantage to obtain information about, for instance, the position/location of restaurants, especially if one is not familiar with the place where one is. In a traditional, wire-based, telephone system, sometimes called Plain Old Telephony System, POTS, there, however, is no cellular division with different base stations to benefit from to find the position of a telephone terminal: Neither in data communication networks, for instance Internet, do the included terminals have any position related information.

In US5,878,126 in the name of Velamuri and others, a method for routing of a telephone call to a destination based on reference to geographical territory/zone is described. At that, a database with geo-coded addresses is used, and an application for the suggested solution is position related services.

In US5,946,687 in the name of Gehani and others, a system for storing of so called personal information manager data, including names, addresses etc is shown. The system makes provision of geographical information possible at request.

WO 00/22862 A1 discloses a method for positioning a stationary communication terminal. The location of the terminal/connection is defined by means of coordinates. The coordinates of the connection are transmitted from the connection over the telecom network to a location database. The subscriber of a wireline telephone network can obtain the coordinates of his location using a satellite positioning receiver, e.g., a GPS-receiver. It is also disclosed that the subscriber dials his local coordinates according to instructions issued to him.

US 5 588 048 describes a method and system for direct routing of telephone calls made by a caller originating from within specific calling areas to one of a plurality of locations of a second party according to certain criteria established by the second party.

US 5 764 745 discloses an apparatus and method for telecommunications network local number portability, which provide service provider portability, location portability, and service portability to subscribers.

The aim of the present invention, however, is to provide a solution for positioning of stationary communication terminals, something which has not been presented by any of the above mentioned documents.

### Summary of the invention

The present invention thus relates to a method for positioning stationary communication terminals, including the steps that identity data and position-grounding information for a stationary communication terminal is entered into a position server, position data related to said communication terminal are registered in said position server depending on said position-grounding information, and a position database is supplemented with said identity data and the to these related position data which method comprises the features defined in the characterising portion of claim 1. According to the present invention, additional different means to get the position data can be offered in different embodiments. Alternatively, a positioning system which operates according to the present invention can be arranged to offer a number of different methods to a user to provide the position-grounding information.

In one embodiment of the method, according to the present invention, said identity data and position-grounding information is also entered into the position server from the stationary communication terminal via a data input interface, for instance via a web interface. Said position-grounding information includes in one embodiment a GPS-signal from a GPS-receiver arranged at the position of the communication terminal, and where GPS-coordinates associated with said GPS-signal constitute said position data. This is a case which requires minimal effort/contribution from the position server, since correct position data are available from the communication terminal. In another embodiment, said position-grounding information also includes a geographical address, where said geographical address is fed/entered into a map database system and is in this translated into position data in form of a geo-code based on geographical coordinates, which geo-code later is transmitted to said position server. In another embodiment, a fixed telephone number to that position on which said communication terminal (1,40) is, is also utilized as position-grounding information. Said fixed telephone number is entered into a telephone number database system and is in that translated into position data in form of a geo-code based on geographical coordinates, which geo-code is transmitted to said position server.

The telephone number to the mobile telephone arranged at the position of the communication terminal, preferably belongs to the user of the stationary communication terminal.

In said position database said identity data and said position data can be supplemented with time data for when a user can be expected to be at said communication terminal. The position is, after a position having been registered by the position server, preferably presented related to the registered position data on a map for check/control of the accuracy of the positioning.

The present invention also relates to a computer program product, for use with a data processing and storing system, for positioning of stationary communication terminals. Said computer program product comprises the features defined in claim 8.

### Brief description of the drawings

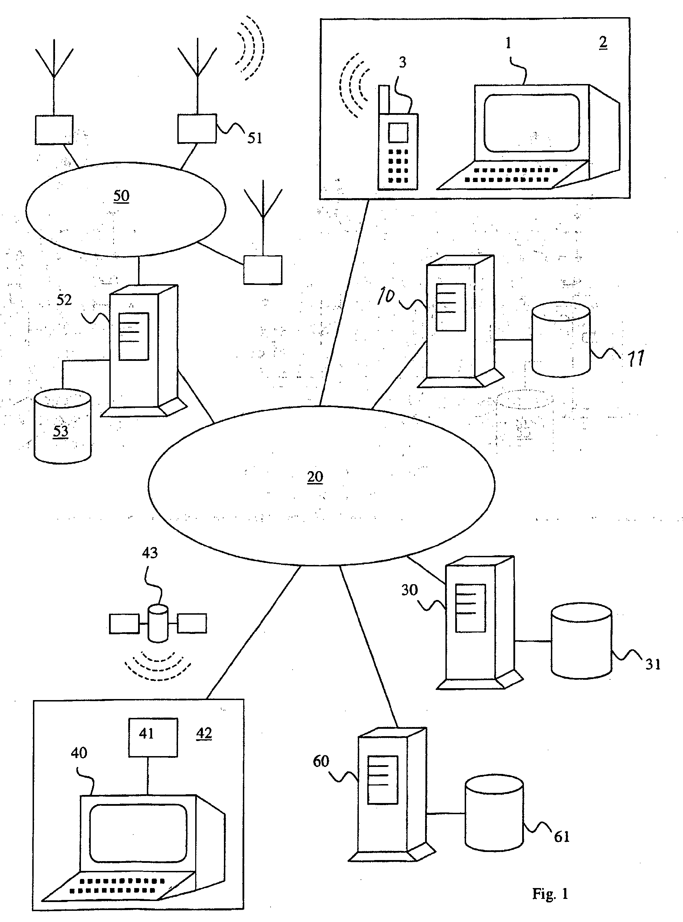

The invention is described below in detail with, at the same time, references to the only Figure 1 which shows a preferred embodiment of the invention.

### Detailed description of preferred embodiments

In Figure 1 a system, in which the method for positioning of stationary communication terminals according to the present invention can be applied, is shown. For the sake of simplicity, the necessary elements for all shown embodiments have been included in one single figure. The expert, however, realizes that not all these elements are necessary to realize one or more embodiments. Further, all subsystems in the figure are connected by one and the same communication network 20, even if it just as well might be quite separate and different transmission paths between the included subsystems.

In the figure is shown how a communication terminal 1, preferably a stationary Internet-connected computer 1, is arranged in a position 2, for instance a user's home. Said user also has a communication terminal 40 arranged in another position 42, for instance a user's workroom. For the purpose of the invention, a position server 10 is arranged connected to the network 20. To the position server 10 a position database 11 is connected. The expert here also realizes that the database 11 just as well might be arranged in any other place in the network 20, from where the data which are stored in the position database 11 are accessible to the position server 10. The position database 11 is a kind of address catalog which is managed by the position server 10. In the position database 11, posts are arranged over users of the stationary positioning service, which the system according to the present invention offers. Each registered stationary communication terminal 1,40 preferably constitutes a post. An example of such a post can include user identity, computer time, that is when the user normally is at the communication terminal 1, 40, password for access to the position database 11, and the geo-code for the communication terminal 1,40 in x- and y-coordinate, and possibly z-coordinate.

Via suitable communication interface, for instance a web-interface, the user can be granted access to his/her posts in the position database 11, preferably managed/ controlled by said password.

The invention consequently includes, or is realized as a method in, a system consisting of a number of subcomponents. One subcomponent is the password-protected position database 11 which, by means of the position server 10, is arranged over users of the fixed positioning service, and their computers 1,40. Another subcomponent is a computer program product which can be executed in said position server 10. This computer program product is arranged to interact with users via a web-interface. The position server 10 is included in a data processing system which includes a number of real or virtual data processing units 1,10,30,40,52, linked by a network system 20. Each data processing unit preferably includes a computer processor or a time-divided part of such a computer processor, a non-volatile storing unit and some form of control software which operates on said computer processor. A device or a human user can interact with the control software via a communication interface, preferably said web-interface, by means of suitable interface device for in and output of data, for instance a keyboard, a screen/display, a mouse pointer, a telephone etc. Via the interface, the computer program product lets the user indicate the position of a fixed computer which the user wants to register. It may be a new registration of a communication terminal 1,40, but also relocation of one in the position database 11 already registered communication terminal 1,40. The user at that can indicate position-grounding information in one of the following ways:
- By giving a street address;
- By giving a fixed telephone number;
- By giving a telephone number to a switched on mobile telephone which is in the same place as the fixed communication terminal 1,40 which shall be positioned;
- By giving GPS-coordinates, in the case the customer happens to have a GPS-receiver 41 in essentially the same place as the communication terminal 1,40;
- By giving id and password in case the computer already is registered in the position database 11.

Regarding the web-interface, it is preferably accessible on the one hand on an own web-site, and on the other via different sites for position depending services.

The computer program product which is executed in the position server 10 can be arranged to offer only one type of positioning. Preferably, however, it is arranged to let the user select between two or more different ways to give/indicate his/her position. Further, the computer program product is preferably arranged to suggest the methods for positioning which provide most accurate results, that is, asks for that position-grounding information which provides most reliable position data to register in the database 11.

If the user knows the geo-code for the position of the communication terminal 1,40, preferably this information is transmitted to the position server 10. In this case the position-grounding information also constitutes the position data.

If the user knows the geographical address of the communication terminal 1,40, but not the geo-code, said address is transmitted as position-grounding information to the position server 10. This position-grounding information after that is used to produce the geo-code for the communication terminal 1,40. There are different systems available for this purpose. In the figure this function has been exemplified by a map database system including a map server 30 and a map database 31. Said map database system is at that arranged to, depending on entered address information, derive the geo-code for position which the address represents. The map database system 30,31 can be connected to, or integrated with, the position server 10. In the figure, however, an example is shown where the map database system 30,31 constitutes a system of its own, which is accessible via a communication network 20. Known map database services which are offered in Sweden are, for instance, the National Land Survey, InfoMedia and TeleAtlas. All addresses in all countries or parts of countries, however, are not geo-coded.

For the case with GPS, the GPS-receiver 41 in known way receives information about its own position by sensing signals from GPS-satellites 43. A GPS-signal including GPS-coordinates is at that transmitted from the communication terminal 1,40 to the position terminal as position-grounding information. If the GPS-coordinates include the geo-code of the coordinates which the position server 10 uses, the position-grounding information can be stored in the position database 11 directly as position data. In other case, the position server 10 translates the GPS-coordinates into geo-coordinates according to the format the position database 11 is adapted to, before storing in that.

In one embodiment the position server 10 is arranged to interact with the number databases of different telecommunication operators. In the figure this is exemplified as a telephone number database system including a telecommunication operator's server 60, which is connected to a telephone number database 61. In the case that the user chooses to try positioning by means of his/her stationary POTS telephone number, this telephone number database system is utilized. Preferably there are in the telephone number database 61 position data in geo-code, alternatively position-grounding information in form of addresses, stored for different telephone numbers. In the latter case, the position-grounding information can be used to derive position data from, for instance, the map database system 30,31. The procedure of deriving position data or position-grounding information from a telephone number database 61, however, does not always work/function, for instance for certain exchange numbers or unlisted telephone numbers.

In one preferred embodiment, the positioning is executed by a mobile network positioning provider. The mobile network operators are probably in most cases those who control this resource, at least initially. Positioning then is done by the means which are available in a mobile communication network 50. The telephone number to a mobile telephone 3 which is located at the communication terminal 1 which shall be positioned, is transmitted to the position server 10. This can be done by the telephone number being transmitted via said communication terminal 1. Alternatively, this can be done by the user by said telephone 3 calling a telephone number belonging to the position server 10. At all events the position server at that can order the mobile network 50 to do/execute positioning of the mobile telephone 3. Different technologies for this have been presented, of which the previously mentioned utilization of Timing Advance in GSM is one. The positioning is preferably based on the communication which occur between the mobile telephone 3 and the base station/stations 51 in the mobile network 50, which the mobile telephone 3 registers. Necessary processing of communication data between the base stations 51 and the mobile telephone 3 is preferably done by a computer system 52,53 connected to the mobile network 50, from which position data can be transmitted to the position server.

Above a number of different embodiments of the present invention have been described. The expert, however, realizes that more embodiments are conceivable within the scope of protection which is defined by enclosed patent claims.

## Claims

1. A method for positioning stationary communication terminals, including the steps that identity data and position-grounding information for a stationary communication terminal (1, 40) are entered into a position server (10, 11), position data related to said stationary communication terminal (1, 40) are registered in said position server (10, 11) depending on said position-grounding information, and a position database (11) is supplemented with said identity data and the related position data,
**characterized in that**
said position-grounding information includes the telephone number of a mobile telephone (3) located at the position of the stationary communication terminal (1), where the position of said mobile telephone (3) is traced in its belonging mobile network (50, 51), and where the detected position of the mobile telephone (3) constitutes said position data.

2. A method as claimed in claim 1, **characterized in that** said identity data and position-grounding information is entered into the position server (10) from the stationary communication terminal (1, 40) via a data input interface.

3. A method as claimed in claim 1 **characterized in that** said position-grounding information includes a GPS-signal from a GPS-receiver (41) arranged at the position of the stationary communication terminal (40), and where GPS-coordinates associated with said GPS-signal constitute said position data.

4. A method as claimed in claim 1, **characterized in that** said position-grounding information includes a geographical address, where said geographical address is entered into a map database system (30, 31) and is translated into position data in form of a geo-code based on geographical coordinates, which geo-code is transmitted to said position server.

5. A method as claimed in claim 1, **characterized in that** said position-grounding information includes a fixed telephone number to the position of said stationary communication terminal (1, 40), where said fixed telephone number is entered into a telephone number database system (60, 61) and is translated into position data in the form of a geo-code based on geographical coordinates, which geo-code is transmitted to said position server (10).

6. A method as claimed in claim 1 **characterized by** the step to supplement said identity data and said position data with time data in said position database (11) indicating when a user can be expected to be at said communication terminal (1, 40).

7. A method as claimed in claim 1 **characterized by** the step to present the position related to said position data on a map for control of the accuracy of the positioning.

8. A computer program product, for use with a data processing and storing system (10, 11), for positioning of stationary communication terminals (1, 40), which computer program product is directly loadable into the internal memory of at least one digital computer and comprises software code portions for performing the steps of any of the methods of claims 1-7, when said product is run on said at least one computer.

## Patentansprüche

1. Verfahren zum Positionieren stationärer Kommunikationsendgeräte, das die Schritte enthält, dass Identitätsdaten und Informationen zum Standort über Grund für ein stationäres Kommunikationsendgerät (1, 40) in einen Positionsserver (10, 11) eingegeben werden, wobei Positionsdaten, die zu dem stationäre Kommunikationsendgerät (1, 40) gehören, in den Positionsserver (10, 11) abhängig von den Informationen zum Standort über Grund eingetragen werden und eine Positionsdatenbank (11) mit den Identitätsdaten und den zugehörigen Positionsdaten ergänzt wird, **dadurch gekennzeichnet, dass**
die Informationen zum Standort über Grund die Telefonnummer eines Mobiltelefons (3) enthalten, das sich an der Position des stationären Kommunikationsendgeräts (1) befindet, wobei die Position des Mobiltelefons (3) in seinem zugehörigen mobilen Netz (50, 51) verfolgt wird und wobei die detektierte Position des Mobiltelefons (3) die Positionsdaten bildet.

2. Verfahren nach Anspruch 1, **dadurch gekennzeichnet, dass** die Identitätsdaten und Informationen zum Standort über Grund in den Positionsserver (10) von dem stationären Kommunikationsendgerät (1, 40) über eine Dateneingabeschnittstelle eingegeben werden.

3. Verfahren nach Anspruch 1, **dadurch gekennzeichnet, dass** die Informationen zum Standort über Grund ein GPS-Signal von einem GPS-Empfänger (41) enthalten, der an der Position des stationären Kommunikationsendgeräts (40) angeordnet ist, und wobei GPS-Koordinaten, die dem GPS-Signal zugeordnet sind, die Positionsdaten bilden.

4. Verfahren nach Anspruch 1, **dadurch gekennzeichnet, dass** die Informationen zum Standort über Grund eine geographische Adresse enthalten, wobei die geographische Adresse in ein Kartendatenbanksystem (30, 31) eingegeben sind und in Positionsdaten in Form eines Geo-Codes, der auf geographischen Koordinaten basiert, umgesetzt werden, wobei der Geo-Code zu dem Positionsserver übertragen wird.

5. Verfahren nach Anspruch 1, **dadurch gekennzeichnet, dass** die Informationen zum Standort über Grund eine feste Telefonnummer zu der Position des stationären Kommunikationsendgeräts (1, 40) enthalten, wobei die feste Telefonnummer in ein Telefonnummerndatenbanksystem (60, 61) eingegeben ist und in Positionsdaten in der Form eines Geo-Codes, der auf geographischen Koordinaten basiert, umgesetzt wird, wobei der Geo-Code zu dem Positionsserver (10) übertragen wird.

6. Verfahren nach Anspruch 1, **gekennzeichnet durch** den Schritt des Ergänzens der Identitätsdaten und der Positionsdaten mit Zeitdaten in der Positionsdatenbank (11), die angeben, wann erwartet werden kann, dass ein Anwender an dem Kommunikationsendgerät (1, 40) ist.

7. Verfahren nach Anspruch 1, **gekennzeichnet durch** den Schritt des Präsentierens der Position, die zu den Positionsdaten gehört, auf einer Karte zum Steuern der Genauigkeit der Positionierung.

8. Computerprogrammprodukt zum Gebrauch mit einem Datenverarbeitungs- und Speichersystem (10, 11) zum Positionieren stationärer Kommunikationsendgeräte (1, 40), wobei das Computerprogrammprodukt direkt in den internen Speicher wenigstens eines digitalen Computers geladen werden kann und Software-Codeabschnitte zum Ausführen der Schritte eines der Verfahren der Ansprüche 1-7, wenn das Produkt auf dem wenigstens einen Computer abläuft, umfasst.

## Revendications

1. Procédé permettant de localiser des terminaux de communication stationnaires, comportant les étapes consistant à entrer dans un serveur de positions (10, 11) des données d'identité et des informations de base sur la position pour un terminal de communication stationnaire (1, 40), enregistrer dans ledit serveur de positions (10, 11) des données de position associées audit terminal de communication stationnaire (1, 40) en fonction desdites informations de base sur la position, et compléter une base de données de positions (11) au moyen desdites données d'identité et des données de position associées,
**caractérisé en ce que**
lesdites informations de base sur la position comportent le numéro de téléphone d'un téléphone mobile (3) occupant la position du terminal de communication stationnaire (1), la position dudit téléphone mobile (3) étant suivie à la trace dans son réseau mobile de rattachement (50, 51), et la position détectée du téléphone mobile (3) constituant lesdites données de position.

2. Procédé selon la revendication 1, **caractérisé en ce que** l'étape consistant à entrer dans ledit serveur de positions (10) lesdites données d'identité et les informations de base sur la position est mise en oeuvre à partir du terminal de communication stationnaire (1, 40) par le biais d'une interface d'entrée de données.

3. Procédé selon la revendication 1, **caractérisé en ce que** lesdites informations de base sur la position comprennent un signal GPS provenant d'un récepteur GPS (41) agencé à la position du terminal de communication stationnaire (40), et des coordonnées GPS relatives audit signal GPS constituant lesdites données de position.

4. Procédé selon la revendication 1, **caractérisé en ce que** lesdites informations de base sur la position comprennent une adresse géographique, ladite adresse géographique étant entrée dans un système de base de données cartographique (30, 31) et convertie en données de position sous la forme d'un géocode basé sur des coordonnées géographiques, lequel géocode est transmis audit serveur de positions.

5. Procédé selon la revendication 1, **caractérisé en ce que** lesdites informations de base sur la position comprennent un numéro de téléphone fixe vers la position dudit terminal de communication stationnaire (1, 40), ledit numéro de téléphone fixe étant entré dans un système de base de données de numéros de téléphone (60, 61) et converti en données de position sous la forme d'un géocode basé sur des coordonnées géographiques, lequel géocode est transmis audit serveur de positions (10).

6. Procédé selon la revendication 1, **caractérisé par** l'étape consistant à compléter lesdites données d'identité et lesdites données de position dans ladite base de données de positions (11) par des données temporelles indiquant lorsqu'un utilisateur pourra être attendu audit terminal de communication (1, 40).

7. Procédé selon la revendication 1, **caractérisé par** l'étape consistant à présenter la position associée auxdites données de position sur une carte pour une plus grande maîtrise de la précision de la localisation.

8. Produit-programme d'ordinateur, destiné à être utilisé avec un système de traitement et de stockage de données (10, 11), permettant de localiser des terminaux de communication stationnaires (1, 40), lequel produit-programme d'ordinateur est directement téléchargeable dans la mémoire interne d'au moins un ordinateur numérique et comprend des parties formant code de logiciel permettant de mettre en oeuvre les étapes de l'un quelconque des procédés selon les revendications 1 à 7, lorsque ledit produit est exécuté sur ledit au moins un ordinateur.
